# EUROPEAN PATENT SPECIFICATION

(11) **EP 0 473 305 B1**
(45) Date of publication and mention of the grant of the patent: **09.07.1997**
(21) Application number: 91307287.2
(22) Date of filing: 08.08.1991
(51) Int. Cl.: G11B 7/00, G11B 21/10

(54) **Recording apparatus, reproducing apparatus, recording and/or reproducing apparatus**
Aufzeichnungsgerät, Wiedergabegerät, Aufzeichnungs- und/oder Wiedergabegerät
Appareil d' enregistrement, appareil de reproduction, appareil d' enregistrement et/ou de reproduction

(30) Priority: 23.08.1990 JP 221725/90
(43) Date of publication of application: 04.03.1992
(73) Proprietor: SONY CORPORATION, Tokyo 141 (JP)
(72) Inventor: Ohga, Norio, c/o Patents Div. Sony Corp., Tokyo 141 (JP); Tsurushima, Katsuaki, c/o Patents Div. Sony Corp., Tokyo 141 (JP); Yoshida, Tadao, c/o Patents Div. Sony Corp., Tokyo 141 (JP)
(74) Representative: Cotter, Ivan John

(56) References cited:
- EP-A- 0 260 722
- EP-A- 0 326 437
- US-A- 4 805 046
- Journal of the Audio Engineering Society vol.36,no.4,April 1988, New York, NY, USA pages 250-282; Ken C. Pohlmann: "The Compact Discs Formats: Technology and Applications"

## Description

This invention relates to recording apparatus, reproducing apparatus, and recording and/or reproducing apparatus.

Current optical discs form disc-shaped recording media which may be classified into three types; a reproduce-only type, a once-write type and an overwrite type, and have a variety of disc diameters and recording capacities.

A feature of an optical disc is that it is small in size and yet is capable of recording and/or reproducing a large amount of information.

For example, in the case of a compact disc (CD) as used for audio signals, a recording track comprising a train of pits is formed spirally at a track pitch of 1.6 µm in a 50 to 116 mm diameter region of a disc which is 120 mm in diameter, and 60 minutes of 2-channel audio signals may be recorded.

A CD is rotated at a constant linear velocity of 1.2 to 1.4 m/s and the recording track formed thereon is scanned by an optical pick-up for detecting by light diffraction the presence or absence of the pits for reproducing the recorded signals. During reproduction, in order for the optical pick-up to scan the recording track correctly, tracking servo control is performed, in addition to focusing servo control.

Recently, an optical disc with a diameter of 80 mm has been proposed, which, while having recording specifications and a signal format similar to those of a CD, has a playback time shorter than that of a CD, so the data capacity is smaller than that of a CD.

Car-mounted and portable reproducing apparatus for CDs take advantage of the small size thereof. With this type of reproducing apparatus, means must be provided for combatting the effect of vibration which would produce track jump. Should track jump occur, the tracking servo control as well as the focusing servo control is lost, which interrupts playback signals or produces unnatural playback signals. The usual practice has been to provide a mechanically strong vibration-proofing system.

The size of a reproducing apparatus is determined partly by the disc diameter. Since a CD has a diameter of 120 mm, the reproducing apparatus cannot be reduced in size beyond a certain limit value, meaning that the apparatus is slightly too large conveniently to be used as a portable apparatus. In addition, with a portable type apparatus, the vibration-proofing inevitably leads to an increased size.

Although reduced data capacity or playback time would reduce the disc size and hence the size of the reproducing apparatus, this would reduce the utility of the apparatus.

The Journal of the Audio Engineering Society Vol 36 No 4 of April 1988 of New York USA at pages 250-282 includes an article on "The Compact Discs Formats : Technology and Applications" by Ken C Pohlmann which mentions that the mini compact disc ie a CD Single which is an 80 mm disc holding 20 minutes of digital audio, has been introduced.

Patent Specification EP-A-0 326 437 discloses a magneto-optical disc which is 120 mm in diameter, is transparent and has a vertical magnetised film formed on the back side thereof with a recording region divided into an inner musical region and an outer data region. Data compressed digital signals can be recorded on the music region and digital signals comprising encoded numerical data can be recorded on the data region. The rotational speed is CLV (constant linear velocity) controlled or CAV (constant angular velocity) controlled and the data region can have a capacity of 240 MB.

Patent Specification EP-A-0 260 722 discloses optical disc apparatus for a conventional CD, which comprises rotational driving means for rotationally driving the CD at a constant linear velocity; an optical head for reading the data from the CD rotated at a constant linear velocity and producing an output signal; an RF cicuit for detecting playback signals from an output of the optical head; playback decoding means for processing the playback signals from the RF circuit by error correction decoding and by demodulation complementary to modulation performed during recording; track jump detecting means supplied with the output signal from the optical head for detecting a track address signal from the track, detecting a track jump due to vibration from the track address signal, and resetting the optical head to a correct track position after the occurrence of a track jump; said apparatus incorporating a buffer memory device temporarily storing successive portions of data for delayed reproduction of the data.

According to one aspect of the invention there is provided a recording apparatus for a disc-shaped recording medium, the apparatus comprising a rotational driving means for rotationally driving the medium which comprises a disc-shaped transparent base plate, a recording film provided on the base plate and a protective film provided on the recording film, wherein the base plate has a diameter not larger than 64 mm and an address information is previously recorded on the disc-shaped recording medium as a wobbled groove, a recording track is formed according to the wobbled groove at a track pitch of approximately 1.6 µm, and the track has an information recording capacity of not less than 130 Mbytes of information with the information recorded on the recording track in a 1/4 data compressed state; the recording apparatus comprising a rotational driving means for detecting a signal from the wobbled groove and rotationally driving the disc-shaped recording medium at a constant linear velocity in accordance with the signal detected from the wobbled groove:
data compression means for data-compressing input digital information;
recording encoding means for processing compressed data from the data compression means by error correction encoding and predetermined modulation;
recording means including a recording head for recording encoded data from the recording encoding means on the disc-shaped recording medium while rotating the recording medium at a constant linear velocity by the rotational driving means;
means for detecting a track jump by the recording means due to vibration and for resetting the recording means to a correct track position after the occurrence of the track jump;
a buffer memory provided between the data compression means and the recording encoding means, the buffer memory having at least a data capacity capable of storing data from the data compression means corresponding to a recording time which elapses between an occurrence of a track jump of a position of the recording means on the disc-shaped recording medium and a resetting of the recording head to a correct track position; and
the means for detecting a track jump further including buffer memory control means to cause data to be read out of the buffer memory during periods when no track jump is detected so as always to maintain a writing space in the buffer memory which is in excess of a predetermined data volume.

According to another aspect of the invention there is provided a recording and/or reproducing apparatus for a disc-shaped recording medium which has a disc-shaped transparent base plate, a recording film provided on the base plate and a protective film provided on the recording film, wherein the base plate has a diameter not larger than 64 mm and an address information is previously recorded on the disc-shaped recording medium, a recording track is formed according to the wobbled track at a track pitch of approximately 1.6 µm and the track has an information recording capacity of not less than 130 Mbytes of information, the apparatus comprising:
rotational driving means for detecting a signal from the wobbled groove and rotationally driving the disc-shaped recording medium at a constant linear velocity in accordance with the signal detected from the wobbled groove;
data compression means for data-compressing input digital information;
recording encoding means for processing compressed data from the data compression means by error correction encoding and predetermined modulation;
recording/reproducing means for recording and reproducing encoded data from the recording encoding means on the disc-shaped recording medium while the disc-shaped recording medium is being rotated by the rotational driving means at a constant linear velocity, the recording/reproducing means including an optical head and means for generating an external magnetic field, the optical head and the mans for generating an external magnetic field being positioned to face each other with the disc-shaped recording medium in-between;
an RF circuit for detecting playback signals from an output of the optical head;
playback decoding means for processing the playback signals from the RF circuit by error correction decoding and by demodulation complementary to modulation performed during recording;
data expansion means for expanding the compressed data from the playback decoding means;
track jump detecting means supplied with the output signal from the optical head for detecting a signal from the wobbled track, detecting a track jump due to vibration from the signal from the wobbled track, and resetting the optical head and the mans for generating an external magnetic field to a correct track position after the occurrence of a track jump; and
a buffer memory provided between the data compression means and the recording encoding means and between the playback decoding means and the data expansion means, the buffer memory having a capacity at least sufficient during recording to store data from the data compression means corresponding to a recording time which elapses between an occurrence of a track jump of a position of the recording means on the disc-shaped recording medium and a resetting of the optical head and the means for generating an external magnetic field to a correct track position, and during reproducing to supply data to the data expansion means corresponding to a playback time which elapses between the occurrence of a track jump of a playback position on the disc-shaped recording medium and a resetting of the playback position of the optical head to a correct track position.

According to a further aspect of the invention there is provided a recording and/or reproducing apparatus for a disc-shaped recording medium which has a disc-shaped transparent base plate, a recording film provided on the base plate and a protective film provided on the recording film, wherein the base plate has a diameter not larger than 64 mm and an address information is previously recorded on the disc-shaped recording medium, a recording track is formed according to the wobbled track at a track pitch of approximately 1.6 µm and the track has an information recording capacity of not less than 130 Mbytes of information, the apparatus comprising:
rotational driving means for detecting a signal from the wobbled groove and rotationally driving the disc-shaped recording medium at a constant linear velocity in accordance with the signal detected from the wobbled groove;
data compression means for data-compressing input digital information;
recording encoding means for processing compressed data from the data compression means by error correction encoding and predetermined modulation;
recording/reproducing means for recording and reproducing encoded data from the recording encoding means on the disc-shaped recording medium while the disc-shaped recording medium is being rotated by the rotational driving means at a constant linear velocity, the recording/reproducing means including an optical head and means for generating an external magnetic field, the optical head and the mans for generating an external magnetic field being positioned to face each other with the disc-shaped recording medium in-between;
an RF circuit for detecting playback signals from an output of the optical head;
playback decoding means for processing the playback signals from the RF circuit by error correction decoding and by demodulation complementary to modulation performed during recording;
data expansion means for expanding the compressed data from the playback decoding means;
track jump detecting means supplied with the output signal from the optical head for detecting a signal from the wobbled track, detecting a track jump due to vibration from the signal from the wobbled track, and resetting the optical head and the mans for generating an external magnetic field to a correct track position after the occurrence of a track jump; and
a buffer memory provided between the data compression means and the recording encoding means and between the playback decoding means and the data expansion means, the buffer memory having a capacity at least sufficient during recording to store data from the data compression means corresponding to a recording time which elapses between an occurrence of a track jump of a position of the recording means on the disc-shaped recording medium and a resetting of the optical head and the means for generating an external magnetic field to a correct track position, and during reproducing to supply data to the data expansion means corresponding to a playback time which elapses between the occurrence of a track jump of a playback position on the disc-shaped recording medium and a resetting of the playback position of the optical head to a correct track position.

With the recording apparatus, digital data may be recorded on a disc-shaped recording medium having a diameter of 64 mm with data compression and with error correction code data annexed to the digital data. If a track jump should occur during recording, data read-out from the buffer memory is discontinued to perform only data read-out from the data compression circuit, and data read-out from the buffer memory is restarted after the recording position has been reset to a correct position, thereby assuring continuous data recording.

If a track jump should occur during reproduction, data recording into the buffer memory is discontinued and only data read-out is performed. Data writing is restarted after correction of the reproducing position, so that reproduction may be continued without interruption of playback signals.

The invention will now be described by way of example with reference to the accompanying drawings, throughout which like parts are referred to by like references, and in which:
Figure 1A is a plan view of a disc-shaped recording medium for use in recording apparatus according to the present invention;
Figure 1B is a side elevational view of the recording medium of Figure 1A;
Figure 2 is a plan view showing a disc cartridge having accommodated therein a reproduce-only optical disc;
Figure 3 is a bottom view of the cartridge of Figure 2;
Figure 4 is a plan view showing a disc cartridge having accommodated therein a magneto-optical disc for recording and reproduction;
Figure 5 is a bottom view of the cartridge of Figure 4;
Figure 6 is a block circuit diagram showing a disc recording and/or reproducing apparatus according to the present invention; and
Figure 7 is a timing chart.

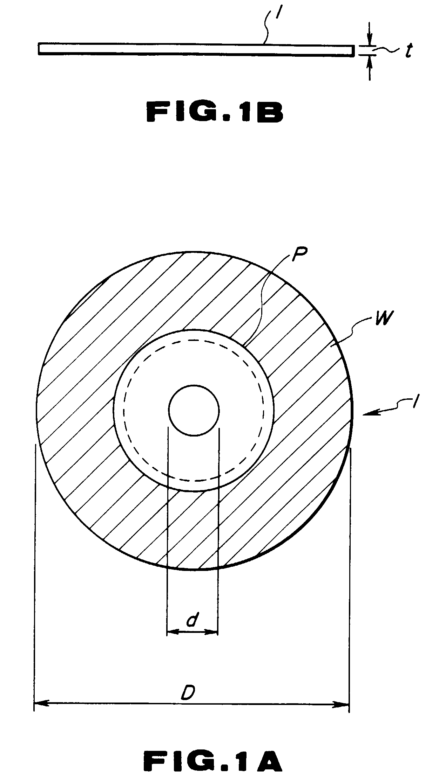

Referring to Figure 1A, a disc-shaped recording apparatus (disc) has an outer diameter D of 64 mm, a centre hole diameter d of 10 mm and a signal recording area W, shown by hatching, of diameter 32 mm and more. The disc 1 has a thickness t which, as shown in Figure 1B, is equal to 1.2 mm.

A recording track is formed spirally on the disc 1 at a track pitch of 1.6 µm. The disc 1 is driven rotationally at a constant linear velocity of 1.2 to 1.4 m/s and 130 M bytes or more of information may be recorded by compression of the information for recording.

For example, when audio signals undergo analogue to digital conversion at a sampling frequency of say 44.1 kHz on a 16-bit-per-sample basis, 2-channel audio data of 60 minutes or longer may be recorded and/or reproduced by compressing the digital audio data 1/4.

Two different disc types may be contemplated. The first type is a reproduce-only optical disc, on which signals are recorded by a train of pits produced by injection moulding or the like, and the second type is an overwrite type magneto-optical disc having a photomagnetic recording layer for recording, reproduction and erasure.

The reproduce-only optical disc includes a transparent disc base plate of polycarbonate or PMMA, on which information signals, herein digital audio signals in the form of a train of pits, have been transferred by injection moulding from a pattern of projections and valleys of a stamper consistent with the information signals. A reflecting film of a metal, such as aluminium, is deposited on the surface of the recording layer, such as by vacuum deposition or sputtering, and a protective layer of an UV resin or the like is applied on the reflective layer, such as by spin coating.

The over-writable magneto-optical disc includes a disc base plate of a transparent plastics material, such as polycarbonate or PMMA, on which a photomagnetic recording film (perpendicular magnetization film) of, for example, TbFeCo, is deposited, such as by vacuum deposition or sputtering, and a protective film of, for example, UV resin, is deposited thereon.

It is noted that, in the case of a magneto-optical disc, recording conditions may be prerecorded by a train of pits formed as prepits or prepatterns in a 30 to 32 mm diameter region of the disc, as shown by a broken line in Figure 1A, simultaneously with moulding of the disc base plate such as by injection moulding.

There is also formed on the disc 1 a pregroove for tracking control, that is a pregroove for controlling a light spot irradiated from an optical head on the disc. An absolute time code may be recorded in the pregroove in superimposition on the wobbling signals used for tracking.

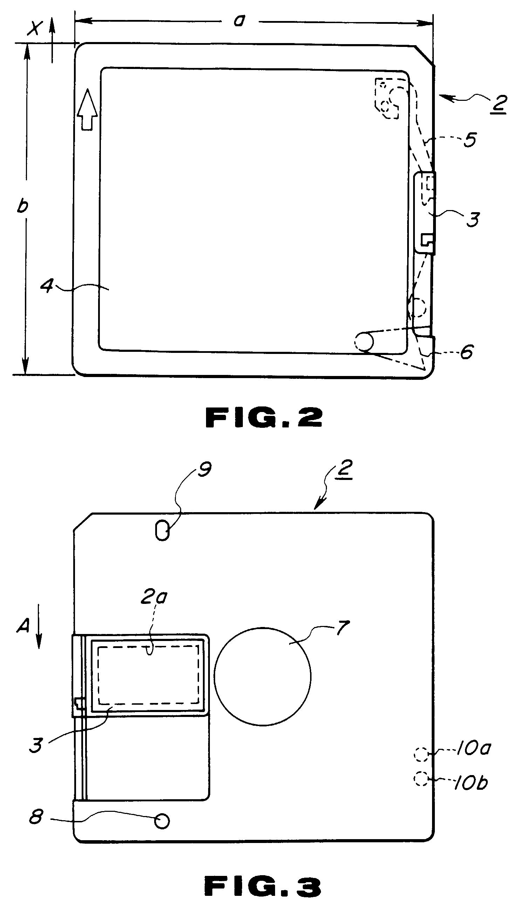

The disc 1 is accommodated in a disc cartridge 2 shown in Figures 2 and 3 to prevent damage to or deposition of dust and dirt on the disc 1.

The cartridge 2 accommodates a reproduce-only optical disc 1 and comprises an upper half and a lower half of synthetic resin or the like. A shutter plate 3 for opening or closing an aperture 2a, for partially exposing a signal recording area W of the disc 1 is slidably mounted on the cartridge 2. The shutter plate 3 is formed in an L-shape by bending a metal plate or by a resin plate or injection moulding of a synthetic resin material. The proximal end of a shorter side of the shutter plate 3 is bent to conform to the contour of the end face of the cartridge 2. The shutter plate 3 is supported at this bent portion by the cartridge 2.

As shown in Figure 3, the shutter plate 3 is displaced in a direction A for opening the aperture 2a. In other words, with the shutter plate 2a thus moved in the direction A, the optical head and the disc 1 are brought to a position facing each other. It is noted that, with the present reproduce-only disc, one of the major sides of the cartridge 2 is not provided with an aperture but is provided with a rectangular area 4 of a slightly lesser size than the outer contour of the cartridge 2 for application of a label etc for a picture or a legend indicating record contents of the disc 1.

Within the cartridge 2, there are provided a locking member 5 for locking the shutter plate 3 at a position closing the aperture 2a, and a shutter reset spring 6 for normally biasing the shutter plate 3 in the direction closing the aperture 2a.

When the cartridge 2 is introduced into a recording/reproducing apparatus via a cartridge inserting opening in the direction X, the locking state of the shutter plate 3 by the locking member 5 is released by a shutter opening member provided in the recording/reproducing apparatus. The shutter plate 3 is then slid against the bias of the spring 6 to open the aperture 2a. When the cartridge 2 is ejected from the recording/reproducing apparatus, the shutter plate 2 is slid by the spring 6 in the direction to close the aperture 2a.

An aperture 7 for entry of a disc table of a disc driving unit for rotationally driving the disc 1 is provided at a mid portion of the lower half on the bottom side of the cartridge 2. There are also provided positioning holes 8 and 9 on the lower half of the cartridge 2 into which positioning pins engage for positioning the cartridge 2 loaded onto a recording and/or reproducing section in the recording and/or reproducing apparatus.

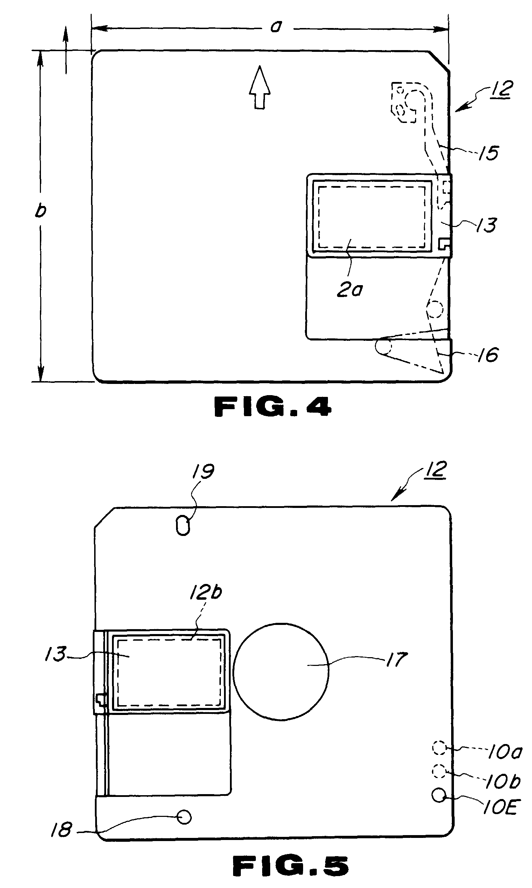

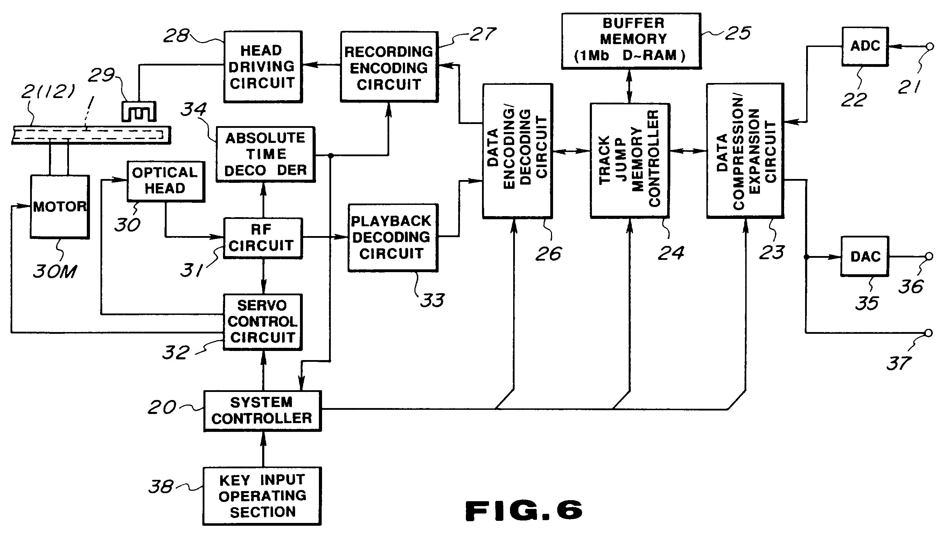

A cartridge 12 having accommodated therein a magneto-optical disc 1 enabling overwriting of information signals is designed as shown in Figures 4 and 5. The cartridge 12 comprises an upper half and a lower half of synthetic resin similar to the above described cartridge 2. The cartridge 12 is provided with apertures 12a and 12b on its upper and lower sides, respectively, for radially exposing a portion of the signal recording area W of the disc 1. By the apertures 12a and 12b, the signal recording area W of the disc 1 is exposed to an optical head and to a magnetic head, respectively. Thus, when a shutter plate 13 is slid in the direction of the arrow A in Figure 5 to open the apertures 12a and 12b, the sides of the disc 1 are exposed.

The shutter plate 13 is of a U-shaped cross-section, unlike the above described shutter 3, and is formed by bending a metal or by a resin plate or by moulding a synthetic resin, and is mounted slidably on the front side of the cartridge 12.

The cartridges 2 and 12 are both of the same size with a transverse length a equal to 72 mm, a longitudinal length b equal to 68 mm and a thickness equal to 5 mm, as shown in Figures 2 and 4.

The lower half on the bottom of the cartridge 2 or 12 is provided with holes or projections 10a and 10b for discriminating whether the disc 1 accommodated therein is a reproduce-only disc or an overwrite type disc, as shown in Figures 3 and 5. The bottom of the cartridge 12 is also provided with a hole 10E as mistaken erasure inhibiting means, which may be a slidable pawl such as is used in a floppy disc, or a rupturable tongue such as is used in a compact cassette.

An apparatus for recording or reproducing audio signals on or from the disc 1 will now be described.

Figure 6 shows an embodiment of recording and/or reproducing apparatus which has been exceedingly simplified in structure through utilization of IC technology.

In the first place, recording on a magneto-optical disc will be explained. It is noted that the circuits of the apparatus are switched between the recording mode and the playback mode by a mode switching signal R/P from a system controller 20. A key operating section 38 is connected to the system controller 20 and a particular operating mode is designated by an input operation at the key operating section 38. The holes 10a and 10b are used to discriminate whether the disc is or is not a magneto-optical disc, and a discriminating output is supplied to the system controller 20.

2-channel analogue audio signals from an input terminal 21 are sampled to an A/D converter 22 at a sampling frequency of 44.1 kHz, and each sampled value is converted into a 16-bit digital signal. This 16-bit digital signal is supplied to a data compression/expansion circuit 23 operating as a data compression circuit during recording. In the present embodiment, input digital data are compressed to 1/4. There are a variety of data compression methods and, for example, an adaptive delta pulse code modulation (ADPCM) with a quantization bit number of four, for example, may be employed. As another method, the input digital data are divided into a plurality of bands so that the band width becomes broader towards a higher frequency range, a block composed of a plurality of samples is formed for each of the bands, with preferably the same number of samples from band to band, an orthogonal transform is performed for each band to obtain coefficient data, and bit allocation from block to block is performed on the basis of the coefficient data. High efficiency data compression may be achieved with this method since it takes into account of characteristics of the human auditory sense with respect to the sound.

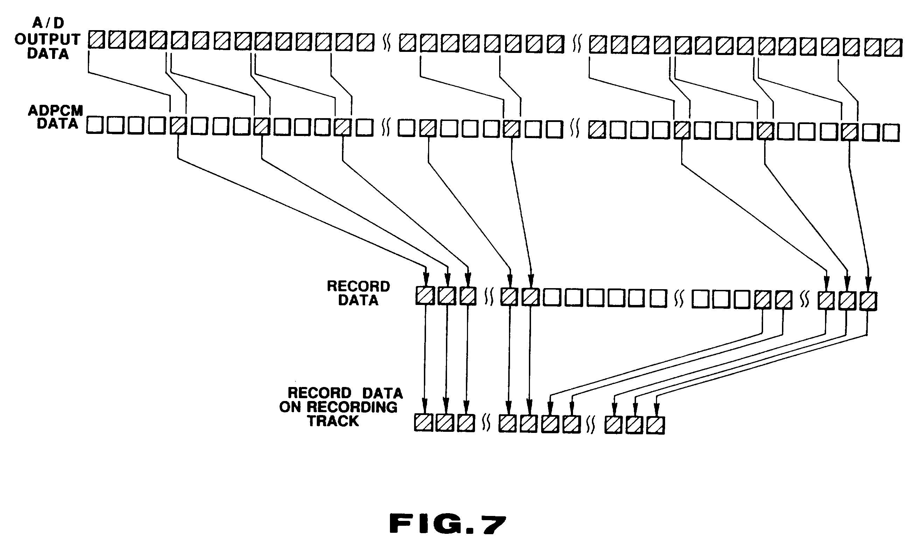

In this manner, digital data DA from the A/D converter 22, shown at A in Figure 7, are compressed to 1/4 at the compression/expansion circuit 23, and compressed data da, shown at B in Figure 7, are transferred to a buffer memory 25 controlled by a track jump memory controller 24. In the present embodiment, a D-RAM having a capacity of 1 M bits is used as the buffer memory 25.

In the absence of a track jump, that is skipping of a recording position on the disc 1 due to vibration or the like during recording, the memory controller 24 reads out the compressed data from the buffer memory 25 at a transfer rate equal to 4 times the writing rate to transfer the read-out data to a data encode-decode circuit 26.

If a track jump is detected during recording, the memory controller 24 caused data transfer to the encode/decode circuit 26 to be terminated, while causing the compressed data da from the compression/expansion circuit 23 to be stored in the buffer memory 25. After the recording position has been corrected, the memory controller 24 causes data transfer to be re-initiated from the buffer memory 25 to the encode/decode circuit 26.

For detecting if a track jump has occurred, a vibration meter, for example, may be mounted on the apparatus to check if the magnitude of a vibration is such as will produce a track jump. It is noted that, with the disc 1, the absolute time code is recorded in superimposition on the wobbling signals for tracking control at the time of pregroove formation, as explained above. This absolute time code may be read from the pregroove during recording for detecting a track jump from the decoded output. Alternatively, an OR of the output of the vibration meter and the absolute time code may be taken for detecting the track jump. It is noted that the laser light power is lowered or reduced to zero on occurrence of a track jump.

Correction of the recording position on occurrence of a track jump may be performed by using the above mentioned absolute time code.

It will be seem from above that the storage capacity corresponding to the compressed data corresponding to the time which elapses between the occurrence of a track jump and the correction of the recording position is required as a minimum storage capacity of the buffer memory 25. It will be recalled that, in the present embodiment, the buffer memory 25 has a memory capacity of 1 Mbits, which memory capacity has been selected as sufficient to satisfy the above requirement.

In this case, the memory control to be performed by the memory controller 24 is such that as small a data amount as possible is stored in the buffer memory 25 during the normal recording operation. More specifically, the memory control is such that, when the data amount in the buffer memory 25 exceeds a predetermined data volume, a preset data volume is read out from the buffer memory 25 so that a writing space in excess of a prescribed data volume is maintained in the buffer memory 25.

The encoding/decoding circuit 26 functions as an encoding circuit during recording for encoding the compressed data da transferred from the buffer memory 25 into data of a CD-ROM sector structure (about 2 Kybtes).

Output data from the encoding/decoding circuit 26 are supplied to a recording encoding circuit 26 in which the output data are processed with encoding for error detection and correction, herein cross interleave Reed Solomon code (CIRC) encoding, as well as modulation suited for recording, herein 8-to-14 modulation (EFM).

Encoded output data from the encoding circuit 27 are supplied via a magnetic head driving circuit 28 to a magnetic head 29. The driving circuit 28 actuates the magnetic head 29 so that a modulating magnetic field consistent with record data is applied to the disc 1 (magneto-optical disc). The record data on the disc 1 are as shown at D in Figure 6.

Although the disc 1 is accommodated in the cartridge 12, the shutter plate 13 is opened on loading the cartridge 12 into the recording and/or reproducing apparatus, so that the disc 1 is partially exposed via the apertures 12 and 12b. A disc table provided at the distal end of a driving motor 30M enters the aperture 15 for rotationally driving the disc 1. The disc driving motor 30M is controlled by a servo control circuit 32 as later described so that the disc 1 is thereby driven rotationally at a linear velocity of 1.2 to 1.4 m/s.

A magnetic plate, not shown, is provided at the middle of the disc 1, while a magnet, also not shown, is provided on the disc table fitted on the output shaft of the motor 30M, so that the disc 1 is clamped to the disc table by magnetic attraction between the magnet and the magnetic plate.

The magnetic head 29 faces the side of the disc 1 exposed via the aperture 12a. An optical head 30 is provided for facing the side of the disc 1 opposite to that faced by the magnetic head 29. The optical head 30 faces the magnetic head 29 with the disc 1 in-between, upon opening of the aperture 12b. The optical head 30 comprises a laser light source, such as a laser diode, optical components, such as a collimator lens, an objective lens, a polarization beam splitter or a cylindrical lens, and a photodetector. During recording, laser light of a constant laser power larger than that during reproduction is irradiated on the recording track. As a result of the light irradiation and the modulating magnetic field applied by the magnetic head 29, information signals or data are recorded on the disc 1 by inverting the direction of the magnetic domain of the optical magnetic recording film of the disc 1 in accordance with the external magnetic field applied to the disc 1 by the magnetic head 29.

The magnetic head 29 and the optical head 30 are interconnected by connecting means, not shown, so as to be transported in unison along the radius of the disc 1, by transport means, not shown.

During decoding, an output of the optical head 30 is supplied via an RF circuit 31 to an absolute time decoding circuit 34, whereby the absolute time code from the pregroove of the disc 1 is extracted and decoded. The decoded absolute time information is supplied to the encoding circuit 27 whereby absolute time information is introduced into record data so as to be recorded on the disc 1. The absolute time information from the absolute time decoding circuit 34 is also supplied to the system controller 20 so as to be used for recognition of the recording position and position control, as mentioned previously.

With the above apparatus, it is possible to reproduce two types of discs, that is a reproduce-only optical disc and an overwrite type magneto-optical disc. These two types may be discriminated by detecting the discrimination holes 10a and 10b. The two disc types may also be discriminated from the volume of the received light based on the different light reflection coefficients between the reproduce-only disc and the overwrite type disc. The disc discrimination output is supplied to the system controller 20 in a manner not shown.

The disc loaded on the apparatus is rotationally driven by the motor 30M which is driven under control of the servo control circuit 32 so that the disc 1 is rotationally driven at a constant linear velocity of 1.2 to 1.4 m/s, in the same way as during recording.

The optical head 30 detects, during reproduction, the light irradiated on and reflected from a target track for detecting focusing errors by, for example, an astigmatic method, while detecting tracking errors by, for example, a push-pull method. If the disc 1 is a reproduce-only optical disc, the optical head 30 detects reproduced signals by light diffraction at the pit train of a target track, whereas if the disc 1 is an overwritable magneto-optical disc, the optical head 30 detects the reproduced signals based on the detected difference in the angle of light polarization, that is a Kerr rotation angle, of the reflected light from the target track.

The output of the optical head 30 is supplied to the RF circuit 31 which extracts the focusing error signals and the tracking error signals from the output of the optical head 30 to transmit the extracted signals to the servo control circuit 32, while processing the playback signals into corresponding binary signals, which are transmitted to a playback encoding circuit 33.

The servo control circuit 32 performs focusing control of the optical system of the optical head so that the focusing error signal will be reduced to zero, while performing tracking control of the optical system of the optical head 30 so that the tracking error signal will be reduced to zero.

The RF circuit 31 extracts the absolute time code from the pregroove to transmit the extracted signal to the absolute time decoding circuit 34. The absolute time information therefrom is supplied to the system controller 20 to be used for controlling the playback position as the occasion may demand. The system controller 20 may also use sector-by-sector address information extracted from the playback area for supervising the position on the recording track scanned by the optical head 30.

A playback decoding circuit 33 receives the binary playback signals from the RF circuit 31 to perform an operation which is complementary to the operation performed by the recording encoding circuit 27, that is decoding for error detection and correction or 8-to-14 demodulation. Output data from the playback decoding circuit 33 are supplied to the encoding/decoding circuit 26.

The encoding/decoding circuit 26 functions as a decoding circuit during reproduction for decoding the CD-ROM sector format data into the original compressed data, and output data are transferred to the buffer memory 25 controlled by the track jump memory controller 24 so as to be written therein at a predetermined write rate.

If a track jump or skipping of the playback position due to vibration or the like should occur during reproduction, the memory controller 24 reads out the compressed data from the data encoding/decoding circuit 26 sequentially at a transfer rate equal to 1/4 the write rate to transfer the read out data to the data compression/expansion circuit 23.

On detection of a track jump during reproduction, the memory controller 24 terminates data writing from the encoding/decoding circuit 26 to the buffer memory 25, and only performs an operation of transferring data to the data compression/expansion circuit 23. When the playback position has been corrected, the memory controller 24 restarts data writing from the encoding/decoding circuit 26 to the buffer memory 25.

Detection of whether a track jump has occurred may be achieved in the same way as during recording, that is, by using a vibration meter, by using the absolute time code recorded in the pregroove of the disc 1 in superimposition on the wobbling signals for tracking control, that is by using a decoded output of the absolute time decoding circuit 34, or by taking an OR of the output of the vibration meter and the absolute time code. Alternatively, the absolute time information and the sector-by-sector address information, extracted from the playback data during reproduction as mentioned previously, may also be used for track jump detection.

Track position control, such as playback position correction, on occurrence of the track jump, may also be achieved by using the above mentioned address information, in addition to using the absolute time code, as mentioned previously.

It will be seen from above that the buffer memory 25 is of such a minimum capacity for reproduction that data corresponding to the time which elapses between occurrence of a track jump until correction of the playback position can be stored therein at all times, so it is possible to continue data transfer from the buffer memory 25 to the data compression/expansion circuit 23 despite the occurrence of a track jump. The memory capacity of 1 Mbits of the buffer memory 25 of the present embodiment is selected as being a capacity having a sufficient allowance to satisfy the above requirement.

It is to be noted that the optical disc according to the present invention is not limited to a reproduce-only optical disc or an overwritable optical disc, but may also be a write-once optical disc.

The overwritable optical disc may also be a phase-transition type optical disc taking advantage of crystal to amorphous phase transitions.

As the information recorded on the disc, video signals, pattern signals such as characters (letter or figure) signals, code conversion signals or map information, may also be recorded, in addition or as an alternative to the audio signals.

## Claims

1. A recording apparatus for a disc-shaped recording medium (1), the apparatus comprising a rotational driving means (30M) for rotationally driving the medium (1) which comprises a disc-shaped transparent base plate, a recording film provided on the base plate and a protective film provided on the recording film, wherein the base plate has a diameter not larger than 64 mm and an address information is previously recorded on the disc-shaped recording medium as a wobbled groove, a recording track is formed according to the wobbled groove at a track pitch of approximately 1.6 µm, and the track has an information recording capacity of not less than 130 Mbytes of information with the information recorded on the recording track in a 1/4 data compressed state;
the recording apparatus comprising a rotational driving means for detecting a signal from the wobbled groove and rotationally driving the disc-shaped recording medium at a constant linear velocity in accordance with the signal detected from the wobbled groove:
data compression means (23) for data-compressing input digital information;
recording encoding means (26, 27) for processing compressed data from the data compression means (23) by error correction encoding and predetermined modulation;
recording means (28) including a recording head for recording encoded data from the recording encoding means on the disc-shaped recording medium (1) while rotating the recording medium at a constant linear velocity by the rotational driving means;
means for detecting a track jump by the recording means due to vibration and for resetting the recording means to a correct track position after the occurrence of the track jump;
a buffer memory (25) provided between the data compression means (23) and the recording encoding means (26, 27), the buffer memory (25) having at least a data capacity capable of storing data from the data compression means (23) corresponding to a recording time which elapses between an occurrence of a track jump of a position of the recording means on the disc-shaped recording medium and a resetting of the recording head to a correct track position; and
the means for detecting a track jump further including buffer memory control means (20) to cause data to be read out of the buffer memory during periods when no track jump is detected so as always to maintain a writing space in the buffer memory (25) which is in excess of a predetermined data volume.

2. Apparatus according to claim 1 wherein the means for detecting a track jump comprises vibration detecting means for detecting whether a track jump has occurred during a recording operation and the buffer memory control means (20) terminates the supply of the compressed data from the data compression means (23) to the recording encoding means (26, 27) and for supplies the compressed data from the data compression means (23) to the buffer memory (25) when a detection output from the vibration detecting means indicates an occurrence of a track jump during the recording operation.

3. Apparatus according to claim 2 wherein the buffer memory (25) is controlled by the buffer memory control means (20) so that data stored in the buffer memory (25) are read out at a rate which is consistent with the data compression rate of the data compression means (23) and which is higher than the data writing rate by the data compression means (23) into the buffer memory (25).

4. A reproducing apparatus for a disc-shaped recording medium (1) which comprises a disc-shaped transparent base plate, a recording film provided on the base plate and a protective film provided on the recording film, wherein the base plate has a diameter not larger than 64 mm and an address information is previously recorded on the disc-shaped recording medium as a wobbled groove, a recording track is formed according to the wobbled groove at a track pitch of approximately 1.6 µm, and the track has an information recording capacity of not less than 130 Mbytes of information is recorded on the recording track in a data compressed state, and wherein recording of information signals and/or reproduction of recorded information signals is effected at a constant linear velocity, the apparatus further comprising:
comprising rotational driving means (30M) for rotationally driving the medium (1) at a constant linear velocity;
an optical head (30) for reading compressed data from the disc-shaped medium (1) rotated at a constant linear velocity and producing an output signal;
an RF circuit (31) for detecting playback signals from an output of the optical head (30);
playback decoding means (33) for processing the playback signals from the RF circuit (31) by error correction decoding and by demodulation complementary to modulation performed during recording;
data expansion means (23) for expanding compressed data from the playback decoding means (33);
track jump detecting means supplied with the output signal from the optical head for detecting a signal from the wobbled track, detecting a track jump due to vibration from the signal from the wobbled track, and resetting the optical head to a correct track position after the occurrence of a track jump; and
a buffer memory (25) provided between the playback decoding means (33) and the data expansion means (23), the buffer memory (25) having a capacity at least sufficient to supply data to the data expansion means (23) corresponding to a playback time which elapses between the occurrence of a track jump of a playback position on the disc-shaped medium and a resetting of the playback position of the optical head to a correct track position.

5. Apparatus according to claim 4 wherein the track jump detecting means comprises vibration detecting means for detecting whether a track jump has occurred during a reproducing operation, and controlling means (26) for terminating the writing of the data from the playback decoding means (33) to the buffer memory (25) and for only transferring data to the expansion means (23) when a detection output from the vibration detecting means indicates an occurrence of a track jump during the reproducing operation.

6. A recording and/or reproducing apparatus for a disc-shaped recording medium (1) which has a disc-shaped transparent base plate, a recording film provided on the base plate and a protective film provided on the recording film, wherein the base plate has a diameter not larger than 64 mm and an address information is previously recorded on the disc-shaped recording medium, a recording track is formed according to the wobbled track at a track pitch of approximately 1.6 µm and the track has an information recording capacity of not less than 130 Mbytes of information, the apparatus comprising:
rotational driving means for detecting a signal from the wobbled groove and rotationally driving the disc-shaped recording medium at a constant linear velocity in accordance with the signal detected from the wobbled groove;
data compression means (23) for data-compressing input digital information;
recording encoding means (26, 27) for processing compressed data from the data compression means (23) by error correction encoding and predetermined modulation;
recording/reproducing means (29) for recording and reproducing encoded data from the recording encoding means (26, 27) on the disc-shaped recording medium (1) while the disc-shaped recording medium is being rotated by the rotational driving means at a constant linear velocity, the recording/reproducing means including an optical head (30) and means (29) for generating an external magnetic field, the optical head and the mans for generating an external magnetic field being positioned to face each other with the disc-shaped recording medium (1) in-between;
an RF circuit (31) for detecting playback signals from an output of the optical head (30);
playback decoding means (26, 27) for processing the playback signals from the RF circuit (31) by error correction decoding and by demodulation complementary to modulation performed during recording;
data expansion means (23) for expanding the compressed data from the playback decoding means (26, 27);
track jump detecting means supplied with the output signal from the optical head for detecting a signal from the wobbled track, detecting a track jump due to vibration from the signal from the wobbled track, and resetting the optical head and the mans for generating an external magnetic field to a correct track position after the occurrence of a track jump; and
a buffer memory (25) provided between the data compression means (23) and the recording encoding means (26, 27) and between the playback decoding means (33, 26) and the data expansion means (23), the buffer memory (25) having a capacity at least sufficient during recording to store data from the data compression means (23) corresponding to a recording time which elapses between an occurrence of a track jump of a position of the recording means on the disc-shaped recording medium and a resetting of the optical head and the means for generating an external magnetic field to a correct track position, and during reproducing to supply data to the data expansion means (23) corresponding to a playback time which elapses between the occurrence of a track jump of a playback position on the disc-shaped recording medium and a resetting of the playback position of the optical head (30) to a correct track position.

7. Apparatus according to claim 6 wherein the track jump detecting means includes vibration detecting means for detecting whether a track jump has occurred during a recording operation or a reproducing operation, and controlling means (20) for terminating supply of the compressed data from the data compression means (23) to the recording encoding means (26, 27) and supplying the compressed data from the data compression means (23) to the buffer memory (25) when a detection output from the vibration detecting means indicates an occurrence of a track jump during a recording operation of recording information signals on the disc-shaped medium (1) by the optical head (30) and the means (29) for generating an external magnetic field, and for controlling the operation of the buffer memory (25) for terminating the writing of data from the playback decoding means (33, 26) to the buffer memory (25) and only transferring data to the expansion means (23) when the detection output from the vibration detecting means indicates an occurrence of a track jump during a reproducing operation by the optical head (30).

## Patentansprüche

1. Aufzeichnungsvorrichtung für einen plattenförmigen Aufzeichnungsträger (1), wobei die Vorrichtung eine Dreh-Ansteuereinrichtung (30M) zum Drehen des Aufzeichnungsträgers (1) aufweist, der eine plattenförmige transparente Grundplatte, einen Aufzeichnungsfilm auf der Grundplatte sowie einen Schutzfilm auf dem Aufzeichnungsfilm aufweist, wobei die Grundplatte einen Durchmesser von nicht mehr als 64 mm aufweist und eine Adreß-Information zuvor auf dem plattenförmigen Aufzeichnungsträger als gewobbelte Rille aufgezeichnet wurde, eine Aufzeichnungsspur gemäß der gewobbelten Rille mit einem Spurabstand von ungefähr 1,6 µm gebildet wurde und die Spur eine Informations-Aufzeichnungskapazität von nicht weniger als 130 Mbyte an Information aufweist, wobei die Information auf der Aufzeichnungsspur in einem 1/4-Daten-komprimerten Zustand ist;
wobei die Aufzeichnungsvorrichtung aufweist eine Dreh-Ansteuervorrichtung zur Erfassung eines Signals von der gewobbelten Rille und zum Drehen des plattenförmigen Aufzeichnungsträgers mit einer konstanten Lineargeschwindigkeit gemäß dem von der gewobbelten Rille erfaßten Signal;
eine Daten-Kompressionseinrichtung (23) zur Datenkomprimierung von eingegebener Digitalinformation;
eine Aufzeichnungs-Codiereinrichtung (26, 27) zur Verarbeitung von komprimierten Daten von der Daten-Kompressionseinrichtung (23) durch eine Fehlerkorrektur-Codierung und eine vorbestimmte Modulation;
eine Aufzeichnungseinrichtung (28) mit einem Aufzeichnungskopf zur Aufzeichnung von codierten Daten von der Aufzeichnungs-Codiereinrichtung auf dem plattenförmigen Aufzeichnungsträger (1), während der Aufzeichnungsträger mit einer konstanten Lineargeschwindigkeit durch die Dreh-Ansteuereinrichtung gedreht wird;
eine Einrichtung zur Erfassung eines Spursprungs der Aufzeichnungseinrichtung aufgrund von Vibration und zum Zurücksetzen der Aufzeichnungseinrichtung auf eine korrekte Spurposition nach dem Auftreten des Spursprungs;
einen Pufferspeicher (25), der zwischen der Daten-Kompressionseinrichtung (23) und der Aufzeichnungs-Codiereinrichtung (26, 27) vorgesehen ist, wobei der Pufferspeicher (25) eine Datenkapazität zur Speicherung wenigstens von Daten von der Daten-Kompressionseinrichtung (23) aufweist, die einer Aufzeichnungsdauer entsprechen, die zwischen einem Auftreten eines Spursprungs einer Position der Aufzeichnungseinrichtung auf dem plattenförmigen Aufzeichnungsträger und einem Zurücksetzen des Aufzeichnungskopfs auf eine korrekte Spurposition verstreicht; und
wobei die Einrichtung zur Erfassung eines Spursprungs weiterhin eine Pufferspeicher-Steuereinrichtung (20) aufweist, die ein Datenauslesen aus dem Pufferspeicher in Zeitdauern veranlaßt, während derer kein Spursprung erfaßt wird, so daß immer ein beschreibbarer Bereich in dem Pufferspeicher (25) gehalten wird, der mehr als ein vorbestimmtes Datenvolumen beträgt.

2. Vorrichtung nach Anspruch 1,
bei der die Einrichtung zur Erfassung eines Spursprungs eine Vibrations-Erfassungseinrichtung zur Erfassung aufweist, ob ein Spursprung während eines Aufzeichnungsvorgangs aufgetreten ist, und die Pufferspeicher-Steuereinrichtung (20) die Weitergabe von komprimierten Daten von der Daten-Kompressionseinrichtung (22) zur der Aufzeichnungs-Codiereinrichtung (26, 27) unterbricht und die komprimierten Daten von der Daten-Kompressionseinrichtung (23) zu dem Pufferspeicher (25) gibt, wenn ein Erfassungs-Ausgangssignal von der Vibrations-Erfassungseinrichtung anzeigt, daß ein Spursprung während des Aufzeichnungsvorgangs aufgetreten ist.

3. Vorrichtung nach Anspruch 2,
bei der der Pufferspeicher (25) durch die Pufferspeicher-Steuereinrichtung (20) so gesteuert wird, daß in dem Pufferspeicher (25) gespeicherte Daten mit einer Rate ausgelesen werden, die der Daten-Kompressionsrate der Daten-Kompressionseinrichtung (23) entspricht und die höher ist als die Daten-Schreibrate durch die Daten-Kompressionseinrichtung (23) in dem Pufferspeicher (25).

4. Wiedergabevorrichtung für einen plattenförmigen Aufzeichnungsträger (1), der eine plattenförmige transparente Grundplatte, einen Aufzeichnungsfilm auf der Grundplatte sowie einen Schutzfilm aufweist, der auf dem Aufzeichnungsfilm vorgesehen ist, wobei die Grundplatte einen Durchmesser von nicht mehr als 64 mm aufweist und eine Adreß-Information zuvor auf dem plattenförmigen Aufzeichnungsträger als gewobbelte Rille aufgezeichnet wurde, eine Aufzeichnungsspur gemäß der gewobbelten Vertiefung mit einem Spurabstand von ungefähr 1,6 µm gebildet wurde und die Spur eine Informations-Aufzeichnungskapazität von nicht weniger als 130 Mbytes an Information auf der Aufzeichnungsspur in einem datenkomprimierten Zustand aufweist, und bei der eine Aufzeichnung von Informationssignalen und/oder eine Wiedergabe der aufgezeichneten Informationssignale mit einer konstanten Lineargeschwindigkeit ausgeführt wird, wobei die Vorrichtung weiterhin aufweist:
eine Dreh-Ansteuereinrichtung (30M) zum Drehen des Aufzeichnungsträgers (1) mit einer konstanten Lineargeschwindigkeit;
einen optischen Kopf (30) zum Auslesen von komprimierten Daten von dem plattenförmigen Aufzeichnungsträger (1), der sich mit konstanter Lineargeschwindigkeit dreht, und zum Erzeugen eines Ausgangssignales;
eine HF-Schaltung (31) zur Erfassung von Wiedergabesignalen aus einem Ausgangssignal des optischen Kopfs (30);
eine Wiedergabe-Decodiereinrichtung (33) zur Verarbeitung der Wiedergabesignale von der HF-Schaltung (31) durch eine Fehlerkorrektur-Decodierung und durch eine Demodulierung, die der während der Aufzeichnung durchgeführten Modulation komplementär ist;
eine Daten-Expansionseinrichtung (23) zur Expansion komprimierter Daten von der Wiedergabe-Decodiereinrichtung (33);
eine Spursprung-Erfassungseinrichtung, der das Ausgangssignal von dem optischen Kopf zugeführt wird, um ein Signal aus der gewobbelten Spur zu erfassen, einen Spursprung aufgrund von Vibrationen aus dem Signal von der gewobbelten Spur zu erfassen und den optischen Kopf nach dem Auftreten eines Spursprungs auf eine korrekte Spurposition zurückzusetzen; und
einen Pufferspeicher (25) zwischen der Wiedergabe-Decodiereinrichtung (33) und der Daten-Expansionseinrichtung (23), wobei der Pufferspeicher (25) eine Kapazität aufweist, die wenigstens ausreicht, um Daten von der Daten-Expansionseinrichtung (23) entsprechend einer Wiedergabezeit bereitzustellen, die zwischen dem Auftreten eines Spursprungs einer Wiedergabeposition auf dem plattenförmigen Aufzeichnungsträger und einem Zurücksetzen der Wiedergabeposition des optischen Kopfs auf eine korrekte Spurposition verstreicht.

5. Vorrichtung nach Anspruch 4,
bei der die Spursprung-Erfassungseinrichtung eine Vibrations-Erfassungseinrichtung zur Erfassung aufweist, ob ein Spursprung während eines Wiedergabevorgangs aufgetreten ist, und eine Steuereinrichtung (26) zur Beendigung des Schreibens der Daten von der Wiedergabe-Decodiereinrichtung (33) in den Pufferspeicher (25), und um nur Daten zu der Expansionseinrichtung (23) zu übertragen, wenn ein Erfassungs-Ausgangssignal von der Vibrations-Erfassungseinrichtung das Auftreten eines Spursprungs während des Wiedergabevorgangs anzeigt.

6. Aufzeichnungs- und/oder Wiedergabevorrichtung für einen plattenförmigen Aufzeichnungsträger (1), der eine plattenförmige transparente Grundplatte, einen Aufzeichnungsfilm auf der Grundplatte sowie einen Schutzfilm auf dem Aufzeichnungsfilm aufweist, wobei die Grundplatte einen Durchmesser von nicht mehr als 64 mm aufweist und eine Adreß-Information zuvor auf dem plattenförmigen Aufzeichnungsträger aufgezeichnet wurde, eine Wiedergabespur gemäß einer gewobbelten Spur (Rille) mit einem Spurabstand von ungefähr 1,6 µm gebildet wurde und die Spur eine Informations-Aufzeichnungskapazität von nicht weniger als 130 Mbyte Information aufweist, wobei die Vorrichtung aufweist:
eine Dreh-Ansteuervorrichtung zur Erfassung eines Signals von der gewobbelten Rille und zum Drehen des plattenförmigen Aufzeichnungsträgers mit einer konstanten Lineargeschwindigkeit gemäß dem Signal, das aus der gewobbelten Rille erfaßt wird;
eine Daten-Kompressionseinrichtung (23) zur Daten-Kompression von eingegebener Digital-Information;
eine Aufzeichnungs-Codiereinrichtung (26, 27) zur Verarbeitung komprimierter Daten von der Daten-Kompressionseinrichtung (23) durch eine Fehlerkorrektur-Codierung und eine vorbestimmte Modulation;
eine Aufzeichnungs-/Wiedergabeeinrichtung (29) zur Aufzeichnung und Wiedergabe codierter Daten von der Aufzeichnungs-Codiereinrichtung (26, 27) auf dem plattenförmigen Aufzeichnungsträger (1), während der plattenförmige Aufzeichnungsträger durch die Dreh-Ansteuereinrichtung mit einer konstanten Lineargeschwindigkeit gedreht wird, wobei die Aufzeichnungs-/Wiedergabeeinrichtung einen optischen Kopf (30) sowie eine Einrichtung (29) zur Erzeugung eines externen Magnetfelds aufweist, wobei der optische Kopf und die Einrichtung zur Erzeugung eines externen Magnetfelds einander gegenüberliegend mit dem plattenförmigen Aufzeichnungsträger (1) dazwischen angeordnet sind;
eine HF-Schaltung (31) zur Erfassung von Wiedergabesignalen aus einem Ausgangssignal des optischen Kopfs (30);
eine Wiedergabe-Decodiereinrichtung (26, 27) zur Verarbeitung der Wiedergabesignale von der HF-Schaltung (31) durch eine Fehlerkorrektur-Codierung und durch eine Demodulation, die der während der Aufzeichnung durchgeführten Modulation komplementär ist;
eine Daten-Expansionseinrichtung (23) zur Expandierung der komprimierten Daten von der Wiedergabe-Decodiereinrichtung (26, 27);
eine Spursprung-Erfassungseinrichtung, der das Ausgangssignal von dem optischen Kopf zugeführt wird, um ein Signal von der gewobbelten Spur zu erfassen, einen Spursprung aufgrund von Vibrationen aus dem Signal der gewobbelten Spur zu erfassen und den optischen Kopf und die Einrichtung zur Erzeugung eines externen Magnetfelds nach dem Auftreten eines Spursprungs auf eine korrekte Spurposition zurückzusetzen; und
einen Pufferspeicher (25) zwischen der Daten-Kompressionseinrichtung (23) und der Aufzeichnungs-Codiereinrichtung (26, 27) und zwischen der Wiedergabe-Decodiereinrichtung (33, 26) und der Daten-Expansionseinrichtung (23), wobei der Pufferspeicher (25) eine Kapazität aufweist, die während der Aufzeichnung wenigstens zur Speicherung von Daten von der Daten-Kompressionseinrichtung (23) genügt, die einer Aufzeichnungszeit entsprechen, die zwischen einem Auftreten eines Spursprungs einer Position der Aufzeichnungseinrichtung auf dem plattenförmigen Aufzeichnungsträger und einem Zurücksetzen des optischen Kopfs und der Einrichtung zur Erzeugung eines externen Magnetfelds auf eine korrekte Spurposition entspricht, und während der Wiedergabe zur Bereitstellung von Daten für die Daten-Expansionseinrichtung (23), die einer Wiedergabezeit entsprechen, die zwischen dem Auftreten eines Spursprungs einer Wiedergabeposition auf dem plattenförmigen Aufzeichnungsträger und einem Zurückstellen der Wiedergabeposition des optischen Kopfs (30) auf eine korrekte Spurposition verstreicht.

7. Vorrichtung nach Anspruch 6,
bei der die Spursprung-Erfassungseinrichtung eine Vibrations-Erfassungseinrichtung, um zu erfassen, ob ein Spursprung während eines Aufzeichnungsvorgangs oder eines Wiedergabevorgangs aufgetreten ist, und eine Steuereinrichtung (20) zur Beendigung der Weitergabe der komprimierten Daten von der Daten-Kompressionseinrichtung (23) zu der Aufzeichnungs-Codiereinrichtung (26, 27) und der Weitergabe der Daten von der Daten-Kompressionseinrichtung (23) zu dem Pufferspeicher (25) aufweist, wenn ein Erfassungs-Ausgangssignal von der Vibrations-Erfassungseinrichtung das Auftreten eines Spursprungs während eines Aufzeichnungsvorgangs von Aufzeichnungs-Informationssignalen auf dem plattenförmigen Aufzeichnungsträger (1) durch den optischen Kopf (30) und der Einrichtung (20) zur Erzeugung eines externen Magnetfelds anzeigt, und zur Steuerung des Betriebs des Pufferspeichers (25) zur Beendigung des Schreibens der Daten von der Wiedergabe-Decodiereinrichtung (33, 26) zu dem Pufferspeicher (25) und zur Weitergabe von Daten zu der Expansionseinrichtung (23) nur, wenn das Erfassungs-Ausgangssignal von der Vibrations-Erfassungseinrichtung das Auftreten eines Spursprungs während eines Wiedergabevorgangs durch den optischen Kopf (30) anzeigt.

## Revendications

1. Appareil d'enregistrement pour un support d'enregistrement en forme de disque (1), l'appareil comprenant des moyens d'entraînement rotatifs (30M) destinés à entraîner, de manière rotative, le support (1) qui comprend une plaque de base transparente en forme de disque, une couche d'enregistrement prévue sur la plaque de base et une couche protectrice prévue sur la couche d'enregistrement, dans lequel la plaque de base a un diamètre ne dépassant pas 64 mm et des informations d'adresse sont enregistrées au préalable sur le support d'enregistrement en forme de disque comme un sillon oscillant, une piste d'enregistrement est formée conformément au sillon oscillant à un pas de piste d'environ 1,6 µm, et la piste a une capacité d'enregistrement d'informations supérieure à 130 Moctets d'informations avec les informations enregistrées sur la piste d'enregistrement dans un état de données compressés à 1/4 ;
l'appareil d'enregistrement comprenant des moyens d'entraînement rotatifs destinés à détecter un signal provenant du sillon oscillant et à entraîner, de manière rotative, le support d'enregistrement en forme de disque à une vitesse linéaire constante conformément au signal détecté provenant du sillon oscillant :
des moyens de compression de données (23) destinés à compresser les données des informations numériques d'entrée ;
des moyens de codage d'enregistrement (26, 27) destinés à traiter les données compressées provenant des moyens de compression de données (23) par codage à correction d'erreur et par modulation prédéterminée ;
des moyens d'enregistrement (28) comprenant une tête d'enregistrement, destinés à enregistrer les données codées provenant des moyens de codage d'enregistrement sur le support d'enregistrement en forme de disque (1) tout en faisant tourner le support d'enregistrement à une vitesse linéaire constante par les moyens d'entraînement rotatifs ;
des moyens destinés à détecter, par les moyens d'enregistrement, un saut de piste dû aux vibrations et à repositionner les moyens d'enregistrement à une position de piste correcte après l'apparition du saut de piste ;
une mémoire tampon (25) prévue entre les moyens de compression de données (23) et les moyens de codage d'enregistrement (26, 27), la mémoire tampon (25) ayant au moins une capacité de données susceptible de stocker des données provenant des moyens de compression de données (23) correspondant à un temps d'enregistrement qui s'écoule entre une apparition d'un saut de piste d'une position des moyens d'enregistrement sur le support d'enregistrement en forme de disque et un repositionnement de la tête d'enregistrement à une position de piste correcte ; et
des moyens destinés à détecter un saut de piste comprenant, de plus, des moyens de contrôle de mémoire tampon (20) pour entraîner l'extraction de données de la mémoire tampon pendant des périodes où aucun saut de piste n'est détecté afin de toujours maintenir un espace d'écriture dans la mémoire tampon (25) qui dépasse un volume de données prédéterminé.

2. Appareil selon la revendication 1, dans lequel les moyens destinés à détecter un saut de piste comprennent des moyens de détection de vibration destinés à détecter si un saut de piste s'est produit pendant une opération d'enregistrement et si les moyens de contrôle de mémoire tampon (20) ont mis fin à l'envoi des données compressées provenant des moyens de compression de données (23) aux moyens de codage d'enregistrement (26, 27) et pour fournir les données compressées provenant des moyens de compression de données (23) à la mémoire tampon (25) lorsqu'une sortie de détection provenant des moyens de détection de vibration indique une apparition d'un saut de piste pendant l'opération d'enregistrement.

3. Appareil selon la revendication 2, dans lequel la mémoire tampon (25) est contrôlée par les moyens de contrôle de mémoire tampon (20), de sorte que les données stockées dans la mémoire tampon (25) soient extraites à une vitesse qui soit compatible avec la vitesse de compression de données des moyens de compression de données (23) et qui soit supérieure à la vitesse d'écriture de données par les moyens de compression de données (23) dans la mémoire tampon (25).

4. Appareil de reproduction pour un support d'enregistrement en forme de disque (1) qui comprend une plaque de base transparente en forme de disque, une couche d'enregistrement prévue sur la plaque de base et une couche protectrice prévue sur la couche d'enregistrement, dans lequel la plaque de base a un diamètre ne dépassant pas 64 mm et des informations d'adresse sont enregistrées au préalable sur le support d'enregistrement en forme de disque comme un sillon oscillant, une piste d'enregistrement est formée conformément au sillon oscillant à un pas de piste d'environ 1,6 µm et la piste a une capacité d'enregistrement d'informations supérieure à 130 Moctets d'informations enregistrées sur la piste d'enregistrement dans un état de données compressées, et dans lequel l'enregistrement de signaux d'informations et/ou la reproduction de signaux d'informations enregistrés est effectuée à une vitesse linéaire constante, l'appareil comprenante de plus :
des moyens d'entraînement rotatifs (30M) destinés à entraîner, de manière rotative, le support (1) à une vitesse linéaire constante ;
une tête optique (30) pour lire les données compressées provenant du support en forme de disque (1) mis en rotation à une vitesse linéaire constante et pour produire un signal de sortie ;
un circuit radiofréquence (31) pour détecter les signaux de reproduction provenant d'une sortie de la tête optique (30) ;
des moyens de décodage de reproduction (33) destinés à traiter les signaux de reproduction provenant du circuit radiofréquence (31) par décodage à correction d'erreur et par démodulation complémentaire à la modulation exécutée pendant l'enregistrement ;
des moyens de décompression de données (23) destinés à décompresser les données compressées provenant des moyens de décodage de reproduction (33) ;
des moyens de détection de saut de piste qui reçoivent le signal de sortie provenant de la tête optique pour détecter un signal provenant de la piste oscillante, pour détecter un saut de piste dû aux vibrations à partir du signal provenant de la piste oscillante et pour repositionner la tête optique à une position de piste correcte après l'apparition d'un saut de piste ; et
une mémoire tampon (25) prévue entre les moyens de décodage de reproduction (33) et les moyens de décompression de données (23), la mémoire tampon (25) ayant une capacité au moins suffisante pour fournir des données aux moyens de décompression de données (23) correspondant à un temps de reproduction qui s'écoule entre l'apparition d'un saut de piste d'une position de reproduction sur le support en forme de disque et un repositionnement de la position de reproduction de la tête optique à une position de piste correcte.

5. Appareil selon la revendication 4, dans lequel les moyens de détection de saut de piste comprennent des moyens de détection de vibration destinés à détecter si un saut de piste s'est produit pendant une opération de reproduction et des moyens de contrôle (26) destinés à mettre fin à l'écriture des données à partir des moyens de décodage de reproduction (33) vers la mémoire tampon (25) et pour transférer uniquement des données aux moyens de décompression (23) lorsqu'une sortie de détection provenant des moyens de détection de vibration indique une apparition d'un saut de piste pendant l'opération de reproduction.

6. Appareil d'enregistrement et/ou de reproduction pour un support d'enregistrement en forme de disque (1) qui comporte une plaque de base transparente en forme de disque, une couche d'enregistrement prévue sur la plaque de base et une couche protectrice prévue sur la couche d'enregistrement, dans lequel la plaque de base a un diamètre ne dépassant pas 64 mm et des informations d'adresse sont enregistrées au préalable sur le support d'enregistrement en forme de disque, une piste d'enregistrement est formée conformément à la piste oscillante à un pas de piste d'environ 1,6 µm et la piste a une capacité d'enregistrement d'informations supérieure à 130 Moctets d'informations, l'appareil comprenant :
des moyens d'entraînement rotatifs destinés à détecter un signal provenant du sillon oscillant et à entraîner, de manière rotative, le support d'enregistrement en forme de disque à une vitesse linéaire constante conformément au signal détecté provenant du sillon oscillant ;
des moyens de compression de données (23) destinés à compresser les données des informations numériques d'entrée ;
des moyens de codage d'enregistrement (26, 27) destinés à traiter les données compressées provenant des moyens de compression de données (23) par codage à correction d'erreur et par modulation prédéterminée ;
des moyens d'enregistrement/reproduction (29) destinés à enregistrer et reproduire les données codées provenant des moyens de codage d'enregistrement (26, 27) sur le support d'enregistrement en forme de disque (1) tandis que le support d'enregistrement en forme de disque est mis en rotation par les moyens d'entraînement rotatifs à une vitesse linéaire constante, les moyens d'enregistrement/reproduction comprenant une tête optique (30) et des moyens (29) destinés à générer un champ magnétique extérieur, la tête optique et les moyens destinés à générer un champ magnétique extérieur étant positionnés de manière à se faire face avec le support d'enregistrement en forme de disque (1) entre eux ;
un circuit radiofréquence (31) pour détecter les signaux de reproduction provenant d'une sortie de la tête optique (30) ;
des moyens de décodage de reproduction (26, 27) destinés à traiter les signaux de reproduction provenant du circuit radiofréquence (31) par décodage à correction d'erreur et par démodulation complémentaire à la modulation exécutée pendant l'enregistrement ;
des moyens de décompression de données (23) destinés à décompresser les données compressées provenant des moyens de décodage de reproduction (26, 27) ;
des moyens de détection de saut de piste recevant le signal de sortie provenant de la tête optique pour détecter un signal provenant de la piste oscillante, pour détecter un saut de piste dû aux vibrations à partir du signal provenant de la piste oscillante, et pour repositionner la tête optique et les moyens destinés à générer un champ magnétique extérieur à une position de piste correcte après l'apparition d'un saut de piste ; et
une mémoire tampon (25) prévue entre les moyens de compression de données (23) et les moyens de codage d'enregistrement (26, 27) et entre les moyens de décodage de reproduction (33, 26) et les moyens de décompression de données (23), la mémoire tampon (25) ayant une capacité au moins suffisante, pendant l'enregistrement, pour stocker des données provenant des moyens de compression de données (23) correspondant à un temps d'enregistrement qui s'écoule entre une apparition d'un saut de piste d'une position des moyens d'enregistrement sur le support d'enregistrement en forme de disque et un repositionnement de la tête optique et des moyens destinés à générer un champ magnétique extérieur à une position de piste correcte et, pendant la reproduction, pour fournir des données aux moyens de décompression de données (23) correspondant à un temps de reproduction qui s'écoule entre l'apparition d'un saut de piste d'une position de reproduction sur le support d'enregistrement en forme de disque et un repositionnement de la position de reproduction de la tête optique (30) à une position de piste correcte.

7. Appareil selon la revendication 6, dans lequel les moyens de détection de saut de piste comprennent des moyens de détection de vibration destinés à détecter si un saut de piste s'est produit pendant une opération d'enregistrement ou une opération de reproduction et des moyens de contrôle (20) destinés à mettre fin à l'envoi des données compressées provenant des moyens de compression de données (23) aux moyens de codage d'enregistrement (26, 27) et à fournir les données compressées provenant des moyens de compression de données (23) à la mémoire tampon (25) lorsqu'une sortie de détection provenant des moyens de détection de vibration indique une apparition d'un saut de piste pendant une opération d'enregistrement de signaux d'informations d'enregistrement sur le support en forme de disque (1) par la tête optique (30) et les moyens (29) destinés à générer un champ magnétique extérieur, et pour contrôler le fonctionnement de la mémoire tampon (25) pour mettre fin à l'écriture de données provenant des moyens de décodage de reproduction (33, 26) vers la mémoire tampon (25) et pour transférer uniquement des données aux moyens de décompression (23) lorsque la sortie de détection provenant des moyens de détection de vibration indique une apparition d'un saut de piste pendant une opération de reproduction par la tête optique (30).
